(19) Europäisches Patentamt
European Patent Office
Office européen des brevets

(11) Publication number : **0 484 083 A1**

(12) **EUROPEAN PATENT APPLICATION**

(21) Application number : **91309944.6**

(22) Date of filing : **28.10.91**

(51) Int. Cl.[5] : **C09D 163/00,** C09D 7/12, C09D 5/00, C08F 2/50

(30) Priority : **29.10.90 US 605801**

(43) Date of publication of application : **06.05.92 Bulletin 92/19**

(84) Designated Contracting States : **CH DE FR GB IT LI NL**

(71) Applicant : **Datesh, John Nicholas, Jr.**
**104 Cascade Road**
**Pittsburgh, Pennsylvania 15221 (US)**

(72) Inventor : **Datesh, John Nicholas, Jr.**
**104 Cascade Road**
**Pittsburgh, Pennsylvania 15221 (US)**

(74) Representative : **Bull, Michael Alan et al**
**Haseltine Lake & Co. Hazlitt House 28**
**Southampton Buildings Chancery Lane**
**London WC2A 1AT (GB)**

(54) **Radiation curable abrasion resistant triglycidyl-trimethylol alkane-based coating compositions.**

(57) Triglycidyl ethers of trimethylol alkanes have been found to form highly abrasion resistant coatings on a variety of substrates when used with onium salt catalysts and exposed to radiation appropriate to the onium salts.

EP 0 484 083 A1

The present invention relates to coating compositions, particularly those which are radiation curable and abrasion resistant, and used in coating a variety of substrates.

There have been many developments in the area of abrasion resistant coating on a wide variety of substrates. Many useful materials can be rendered more useful by applying a coating which resists abrasion, including plastics, paper products, photographic products, wood products and metal products. A range of different types of coatings have been developed to meet this need.

U. S. Patent No. 4,049,861 discloses abrasion resistant coatings based upon the polymerization of epoxy-terminated silanes.

U. S. Patent No. 4,058,401 discloses the use of onium salts with Group VIa elements to cure epoxy compositions and is representative of the onium salt-epoxy technology.

U. S. Patent No. 4,101,513 discloses the use of a broad range of onium salt photo-initiators to cure silanes, including epoxy-terminated silanes, to form abrasion resistant coatings. U. S. Patent No. 4,156,046 discloses further useful epoxy-silane-onium salt abrasion resistant coatings which incorporates flexiblizing epoxies including triglycidyl ethers of trimethylolpropane, which is used as an additive for improving flexibility.

U. S. Patent No. 4,092,173 discloses abrasion resistant coatings which are radiation curable based upon urethane-acrylate systems.

U. S. Patent No. 4,371,566 discloses a radiation-curable, abrasion-resistant coating based upon pentaerythritol polyacrylates.

Although the prior art coatings have met with some success, they have not been without problems. The epoxy silane coatings have proven to be very abrasion resistant, but quite expensive and highly susceptible to moisture attack. Other coatings of the prior art exhibit relatively high viscosities, and must be cut with an organic solvent to reduce viscosity. Such solvents negatively affect the polymerization mechanism and present environmental handling problems.

Accordingly, there exists a clearly defined need in the art for a highly abrasion resistant, flexible, low viscosity, moisture resistant coating that need not be cut with organic solvents.

Generally, radiation-cured, low viscosity, very high-solids, epoxide-based abrasion-resistant coating have not been disclosed.

Accordingly, it is an object of the present invention to provide a water-resistant coating composition having high abrasion resistance when cured.

It is another object of the invention to provide a coating composition having low viscosity.

It is yet another of the invention to provide a coating composition containing little or no organic solvents.

It is a further object of the invention to provide a coating composition that remains flexible when cured.

It is a further object of the invention to combine the favorable properties of excellent abrasion resistance, flexibility, water resistance, low viscosity and low organic solvents in one composition.

These and other objects of the invention will be more fully understood from the following description of the invention with reference to the illustrations appended hereto.

It has been found that compositions having reactants comprising about 25 weight percent or greater of triglycidyl ethers of trimethylol alkanes and onium salt catalysts provide low viscosity, easy to apply, high solids compositions which cure to form highly abrasion resistant coatings on a wide variety of substrates. As used herein, the term "reactants" refers to only the primary polymerizable materials used in the composition, excluding other minor components, such as catalysts and additives.

Triglycidyl ethers of trimethylol alkanes are low viscosity (less than about 200 cps at 25°C) epoxides which until now have generally been used as flexiblizing additives for epoxy resin compositions.

Used in compositions at a level of at least about 25% of reactants by weight and containing a suitable amount of onium salt, I have found that triglycidyl ethers of trimethylol alkanes cure to form highly abrasion resistant, flexible coatings on virtually any substrate. The coatings of this invention have the additional advantage of being high solids (greater than about 50%) and low viscosity with low toxicity. The utility of such a coating has been heightened by the tightening of permissible levels of solvent emissions by governmental authorities around the world.

Triglycidyl ethers of trimethylol alkane are epoxides which, until now, have been considered primarily as additives, i.e., flexiblizing epoxides for use in other systems. They have not been considered as the basis for abrasion-resistant coatings by themselves. They are recommended in U. S. Patent No. 4,156,046 as additives, useful in the compositions described in that reference for providing flexibility and for preventing bloom in the abrasion resistant epoxy-silane coatings disclosed in U. S. Patent No. 4,049,861.

I have found that surprisingly, triglycidyl ethers of trimethylol alkanes, particularly aliphatic triglycidyl ethers of trimethylol alkanes, yield low viscosity, water resitant coatings which, when cured in the presence of onium salts under appropriate radiation, form extremely hard, abrasion-resistant coatings, in the complete absence of epoxy-silanes, although epoxy-silanes may be used as co-polymers with the triglycidyl ethers of trimethylol

alkanes. Such coatings also possess good flexibility and clarity and are virtually colorless, making them excellent coatings for the protection of flexible substrates such as clear plastics films, photographic films and prints and printed paper products.

The coatings of the present invention also can be used to protect glass, wood, metal and painted metal substrates, as well as virtually any other coatable surface, from abrasion.

Porous surfaces are generally less suitable for such coatings because the low viscosity coatings tend to be absorbed into the substrate and do not cure as quickly; however, thickeners can be added to the coatings to overcome such absorption problems, provided the thickeners do not retard the penetration of radiation.

Triglycidyl ethers of trimethylol alkanes, as contemplated by this invention, are preferably represented by the formula

$$R\text{-}C\text{-}(R')_3$$

where R is an alkane group of 1 to 4 carbons and R′ is represented by the formula

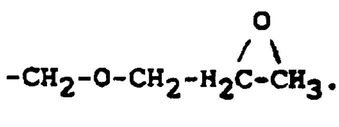

Onium salts as used according to the present invention are preferably represented by the formula

$$(R^1)(R^2)(R^3)\text{-}A\text{-}X$$

where $R^1$, $R^2$ and $R^3$ are the same or different, and each is an aromatic group, which group is at least as electron-withdrawing as benzene, A is a Group Va, VIa or VIIa atom and X is an anion which when combined with a hydrogen atom would form an acid capable of curing an epoxide.

Such onium salts are known in the art, although not for their specific use disclosed herein. For example, U. S. Patent Nos. 4,058,400; 4,058,401; 4,102,687; 4,026,705 show the use of certain onium salts as cationic polymerization catalysts for use with certain types of monomers.

The preferred among the onium salts for purposes of the present invention are the triarylsulfonium hexafluorohalides. The most preferred salts for purposes of the present invention are triarylsulfonium hexafluorophosphate and triarylsulfonium hexafluoroantimonate.

The use of conventional additives to coatings, for example, for the modification of flow-out, adhesion, leveling, ultraviolet absorption, thickening, dispersing, slip, anti-blocking and similar characteristics may be employed with preferred embodiments of the present invention. However, the use of any such additives must be restricted to those which will not affect the cationic polymerization mechanism of the present invention. For example, the use of anionic additives should preferably be restricted to very small amounts (preferably less than about 0.25% by weight of the reactants) or avoided altogether. On the other hand, compatible surfactants may be used up to at least about 5% by weight of the reactants. For the purposes of this invention, the weight of such additives, including onium salt catalyst, shall not be considered when the weight of the other reactants are discussed, even though these additives may also be co-reactants. For example, onium salts are typically delivered in a solution such as propylene carbonate, which reacts with the triglycidyl ethers of trimethylol alkanes during curing. However, because these additives are used in such small quantities relative to the triglycidyl ether of trimethylol alkane, they are not considered a "reactant" or part of the "total reactants," as those terms are used herein when referring to weight percent of the reactants.

Preferred additives for use with the present invention include siloxane and fluorinated surfactants to improve flow-out, leveling and anti-blocking. The most preferred additives include siloxy-containing polycarbinols (surfactants) such as Dow Corning 193 manufactured by Dow Corning; ethoxy-modified siloxanes such as Union Carbide SILWET 7604 manufactured by Union Carbide of Tarrytown, New York, and fluorinated surfactants such as 3M FLUORAD FC-430, manufactured by the Minnesota Mining and Manufacturing Company of St. Paul, Minnesota, particularly when used in combination.

Copolymerizable epoxy-containing materials may also be used as reactants in the compositions of this invention, for example, where it is desirable to vary certain properties of the composition and/or coating, such as viscosity. The term "epoxy-containing materials" includes all compounds which include one or more oxirane groups, including cycloaliphatic epoxides, aromatic epoxides, aliphatic epoxides, epoxy-silanes, epoxy-acrylates, epoxy-urethanes and epoxy-sulfonates. Preferred epoxy-containing materials include diglycidyl ether of neopentyl glycol, gamma-glycidoxypropyl trimethoxysilane and 2-ethylhexyl glycidyl ether for lowering viscosity; vinylcyclohexene dioxide and vinylcyclohexene monoxide for speeding the cure; and 3,4-epoxycyclohexylmethyl-3,4-epoxy-cyclohexane-carboxylate for improved surface feel. The most preferred epoxy-containing materials are 3,4-epoxycyclohexylmethyl-3,4-epoxy-cyclohexane-carboxylate vinylcyclohexene monoxide.

Also, acrylates and vinyl compounds may be used as reactants in small amounts in the coatings of the present invention, preferably less than twenty percent of the reactants by weight. Higher concentrations cause the creation of an undesirable haze in the coating.

The preferred compositions of this invention comprise greater than about 50 percent of the triglycidyl ethers of trimethylol alkane compounds by weight of the total reactants; abrasion resistance of such compositions are superior to those compositions containing less than about 50% percent by weight triglycidyl ether of trimethylol alkane. In the most preferred compositions, the triglycidyl ethers of trimethylol alkane comprise 100 percent by weight of the reactants; such compositions are extremely abrasion-resistant.

The coatings of the present invention may be applied and cured, for example, by applying a desired coating thickness to a substrate and curing the coating with radiation. As used herein, the term "radiation" means any emission of radiant energy in the form of waves or particles which promotes actinism (activation) of the onium salt catalyst to initiate the curing reaction of the coating composition. Such radiation includes, by way of example, but not limitation, ultraviolet light, natural sunlight, electron beams, and, in the case of onium salt catalysts that have been blue light sensitized, blue light.

As used herein, the term "low viscosity" means less than about 200 cps at 25°C and preferably less than about 100 cps at 25°C.

As used herein, the term "high solids" means greater than about 40% by weight solids, and preferably greater than about 50% by weight solids.

The following examples illustrate the useful properties of the present invention. In each example, a coating was prepared as described and applied to the subject substrate and cured with ultraviolet light. Unless explicitly stated otherwise, all percentages are weight percent. The cured coatings were then examined for clarity and abrasion resistance. A piece of 000 grade steel wool was rubbed across each cured coating with moderate hand pressure to gauge relative abrasion resistance for each coating. A coating was considered to have "excellent" abrasion resistance if the steel wool produced only a few (3-4) light scratch lines in the surface with no "hazing." A coating was considered to exhibit "very good" abrasion resistance if the same steel wool produced a greater number of scratch lines, but no "hazing." A coating was considered to have "good" abrasion resistance if it produced even more scratch lines, and approached "hazing." A coating was considered to have "fair" abrasion resistance if it produced still more scratch lines and definite hazing. In each case, the sample was tested for water resistance by allowing a drop of water to sit on the surface of the coating and by observing the tendency of water to run off the coating and form "crazing" or cracks in the coating.

Example 1

Example 1 demonstrates a most preferred embodiment of the present invention, wherein the triglycidyl ether of trimethylol alkane comprises 100% of the reactants and yielded excellent abrasion-resistant properties. A composition was prepared by simple mixing 10 grams of triglycidyl ether of trimethylol ethane with 0.3 grams of onium salt catalyst, in this case a solution of 50% triarylsulfonium hexafluoroantimonate-50% propylene carbonate (Union Carbide UVI CYRACURE 6974). A few drops of a surfactant mixture of 75% SILWET 7604 and 25% TRYSOL S366 (manufactured by Troy Chemical Company, Newark, New Jersey) ("Surfactant Mix 1") was used as a wetting and leveling agent. The mixture was coated onto a color photograph by use of a wire-wound coating roller which produced an even coating 0.3 mils thick. The coated substrate was exposed to a GE sunlamp as a source of ultra-violet ("UV") radiation at a distance of 12 inches for a period of 15 to 20 seconds. The composition cured to a clear, hard coating which could hardly be scratched by 000 grade steel wool. This level of abrasion resistance was considered excellent. This type of coating produced only a water ring after allowing a drop of water to sit on the surface for several minutes.

Example 2

Example 2 illustrates a coating wherein triglycidyl ether of trimethylol propane comprised 100% of the reactants used for preparing the coating composition, again producing excellent abrasion resistance. A composition was prepared as in Example 1 except that 30 grams of triglycidyl ether of trimethylol propane (henceforth designated "TF-3") was used with 0.3 grams of UVI 6974. A color photograph was coated and exposed to UV light as in Example 1. The composition cured to a clear, hard coating with excellent abrasion resistance.

Example 3

Example 3 illustrates a coating of the prior art, and demonstrates the comparable abrasion resistance obtained with the coatings of the present invention. As a comparison, a composition known to be highly abrasion

resistant was prepared as in Example 1, using 10 grams of gamma-glycidoxypropyl trimethoxysilane (Union Carbide A-187 silane) with 0.3 grams of UVI CYRACURE 6974 and a few drops of Surfactant Mix 1. A color photograph was coated and exposed to UV light as in Example 1. The composition cured to a clear, hard coating with excellent abrasion resistance, approximately the same degree as Examples 1 and 2. However, when the type of coating prepared in Example 3 was tested with water, the coating experienced "crazing," wherein the coating exhibited cracking within the circumference of the water drop.

Example 4

Example 4 illustrates a less-preferred embodiment of the invention, wherein the triglycidyl ether of trimethylol alkane comprised only 50% by weight of the total reactants, and produced very good abrasion resistance, though not as good as Examples 1 and 2 wherein the triglycidyl ether of trimethylol alkane comprised 100% by weight of the reactants. A composition was made by mixing 2.5 grams of triglycidyl ether of trimethylol propane, 0.5 grams of vinylcyclohexene monoxide, 0.5 grams of 3,4-epoxycyclohexyl-methyl-3,4-epoxy-cyclohexane-carboxylate (Union Carbide 4221 Epoxide UCAR resin), 1.5 grams of 2-ethyl hexyl glycidyl ether, 0.2 grams of UVI CYRACURE 6974 and Surfactant Mix 1. The composition was tested as in Example 1 and yielded a hard, clear, smooth cured coating with very good abrasion resistance.

Example 5

Examples 5-10 illustrate that as the amount of triglycidyl ether of trimethylol alkane drops below about 35% of the total reactants, the abrasion resistance begins to drop from very good to good. However, Example 11 illustrates very good abrasion resistance despite having only about 30% by weight triglycidyl ether of trimethylol alkane in the total reactants. A composition was made by mixing 2 grams of triglycidyl ether of trimethylol propane, 0.6 grams of vinylcyclohexene monoxide, 0.6 grams of 4221 Epoxide, 1.8 grams of 2-ethyl hexyl glycidyl ether, 0.3 grams of UVI CYRACURE 6974 and Surfactant Mix 1. The composition was tested as in Example 1 and yielded a hard, clear, smooth cured coating with good abrasion resistance.

Example 6

A composition was made by mixing 7 grams of triglycidyl ether of trimethylol propane, 1.25 grams of vinylcyclohexene monoxide, 1.25 grams of 4221 Epoxide, 2.5 grams of diglycidyl ether of neopentyl glycol, 0.4 grams of UVI CYRACURE 6974 and Surfactant Mix 1. The composition was tested as in Example 1 and yielded a hard, clear, smooth cured coating with very good abrasion resistance.

Example 7

A composition was made by mixing 3 grams of triglycidyl ether of trimethylol propane, 1.5 grams of limolene dioxide, and 1.5 grams diglycidyl ether of neopentyl glycol, 0.2 grams of UVI CYRACURE 6974 and Surfactant Mix 1. The composition was tested as in Example 1 and yielded a hard, clear, smooth cured coating with very good abrasion resistance.

Example 8

1.5 grams of 2-ethyl hexyl glycidyl ether was added to the composition of Example 7. The composition yielded a coating with very good abrasion resistance.

Example 9

1 gram of 2-ethyl hexyl glycidyl ether was added to the composition of Example 8. 0.1 gram of UVI CYRACTURE 6974 and a drop of Surfactant Mixture 1 were also added. The composition yielded a coating with good abrasion resistance.

Example 10

A composition was made by mixing 3 grams of triglycidyl ether of trimethylol propane, 1 gram of vinylcyclohexene monoxide, 1 grams of 4221 Epoxide, 2.5 grams of diglycidyl ether of neopentyl glycol, 2.5 grams of 2-ethyl hexyl glycidyl ether, 0.5 grams of UVI CYRACURE 6974 and Surfactant Mix 1. The composition was

tested as in Example 1 and yielded a hard, clear, smooth cured coating with good abrasion resistance.

Example 11

A composition was made by mixing 30 grams of triglycidyl ether of trimethylol propane, 10 grams of vinylcyclohexene monoxide, 10 grams of 4221 Epoxide, 25 grams of diglycidyl ether of neopentyl glycol, 25 grams of 2-ethyl hexyl glycidyl ether, 5 grams of UVI CYRACURE 6974 and 1 gram of Surfactant Mix 1. The composition was tested as in Example 1 and yielded a hard, clear, smooth cured coating with very abrasion resistance.

Example 12

A composition was made by mixing 40 grams of triglycidyl ether of trimethylol propane, 10 grams of vinyloyclohexene monoxide, 10 grams of 4221 Epoxide, 15 grams of diglycidyl ether of neopentyl glycol, 35 grams of 2-ethyl hexyl glycidyl ether, 5 grams of UVI CYRACURE 6974 and 1 gram of Surfactant Mix 1. The composition was tested as in Example 1 and yielded a hard, clear, smooth cured coating with very good abrasion resistance, observably better than that of Example 11, but not so good as that of Examples 1-3.

Example 13

Example 13 illustrates that useful additives, in this case, 2,4 hydroxybenzophenone, can be added to the composition of the present invention with no ill effects to the abrasion resistance properties of the resulting coating. To the composition of Example 11 was added 0.2 grams of 2,4-hydroxybenzophenone (a UV absorber). Abrasion resistance was the same as in Example 11.

Example 14

To the composition of Example 11 was added 1 gram of diglycidyl ether of dimethyldisiloxane. Abrasion resistance was the same as in Example 11.

Example 15

Examples 15-19 illustrate the excellent abrasion resistance and flexibility of the present invention, as well as the versatility of the invention as a useful coating for a wide variety of substrates. A composition was prepared using 20 grams of triglycidyl ether of trimethylol propane, 0.2 grams of SF-1023 SILICONE (a dimethyldiphenyl polysiloxane surfactant manufactured by General Electric, Schenectedy, New York) and 1 gram of UVI CRYACURE 6974. This composition was coated onto painted aluminum sheet with both a .3 mil and a 3 mil coating bar. In both cases the coating was extremely abrasion resistant.

Example 16

The composition of Example 15 was coated onto a glass block. The cured coating was extremely abrasion resistant.

Example 17

The composition of Example 15 was coated onto the surface of a piece of sanded wood. The cured coating was extremely abrasion resistant.

Example 18

The composition of Example 15 was coated onto the surface of galvanized steel. The cured coating was extremely abrasion resistant.

Example 19

The composition of Example 15 was coated onto a strip of developed photographic negative. The cured coating was extremely abrasion resistant and exhibited excellent flexibility, not cracking even when the film substrate was bent over upon itself.

Example 20

Example 20 illustrates the tendency of acrylates to form a haze when used in compositions of the present invention. A composition was prepared using 40 grams of triglycidyl ether of trimethylol propane, 40 grams of diglycidyl ether of neopentyl glycol, 20 grams of pentaerythritol triacrylate, 6 grams of UVI CYRACURE 6974 and 1 gram of Dow Corning 193. The coating when cured on a color photograph had very good abrasion resistance, but had a haze.

Example 21

Example 21 illustrates the relatively poor abrasion resistance obtained when the amount of triglycidyl ether of trimethylol propane drops below about 25% of the total reactants. A composition was made by mixing 20 grams of triglycidyl ether of trimethylol propane, 15 grams of 4221 Epoxide, 15 grams of 2-ethyl hexyl glycidyl ether, 50 grams of diglycidyl ether of neopentyl glycol, 7.5 grams of CYRACURE UVI 6974 and a polyether-modified polydimethylsiloxane surfactant. The composition was tested as in Example 1 and yielded a hard, clear, smooth cured coating with abrasion resistance which was good, but noticeably less than the other examples and barely acceptable as an abrasion resistant coating.

Example 22

A composition was made by mixing 20 grams of triglycidyl ether of trimethylol propane, 1 gram of a proprietary cycloaliphatic epoxide from Union Carbide (UVR 6379), 6 grams of water, 1 gram of UVI CYRACURE 6974 and poly-ether modified poly-dimethyl siloxane additives. The cured coating of a photographic print exhibited very good abrasion resistance. The same composition exhibited excellent abrasion resistance when coated onto a printed paper label and cured.

Example 23

A composition was made by mixing 33 grams of triglycidyl ether of trimethylol propane, 5 grams of ANCAREZ 300A, an epoxy-urethane manufactured by Pacific Anchor Chemical, Los Angeles, California, 10 grams of propylene carbonate and 3 grams of UVI CYRACURE 6974 and a modified dimethyl siloxane additive. The curing of the coating took 30 seconds and the cured coating on a photographic print exhibited excellent abrasion resistance.

Example 24

A composition was made by mixing 50 grams of triglycidyl ether of trimethylol propane, 15 grams of 4-butyrolactone, 15 grams of 2-ethylhexyl glycidyl ether, 1 gram of UVR 6351 (a proprietary cycloaliphatic epoxide from Union Carbide), and 6 grams of UVI 6990 (a 50-50 solution of propylene carbonate and triarylsulonium hexafluorophosphate from Union Carbide) and a modified polydimethylsiloxane additive. The cured coating of a photographic print exhibited very good abrasion resistance.

Examples 25-26 demonstrate the inferior nature of coating compositions of the prior art as compared with those of the present invention.

Example 25

In this example, the coating composition was identical to that used in Example 1, except that UCAR 4221 was substituted for the triglycidyl ether of trimethylol ethane. The composition was coated onto a color photograph and exposed to UV lamp as in Example 1. The resulting coating was smooth, clear and water resistant. However, abrasion resistance was only fair (scratching and substantial hazing). Viscosity of the coating composition was over 200 cps. When coated onto a printed paper label, the abrasion resistance was fair to good.

Example 26

To the Example 25 composition was added 1.1 grams of an alpha olefin epoxide C-16 (VIKOLOX 16, from Atochem, Minneapolis, Minnesota). This composition is that suggested by Union Carbide in its Bulletin #6: 3/14/90 as an over-print varnish for paper and other substrates. The viscosity of this formulation was 140 cps. It coated more easily than Example 25 and cured to a smooth, clear, water resistant coating on a color photograph. Abrasion resistance was fair as in Example 26. When coated onto a printed paper label, abrasion resistance was fair to good.

It will be appreciated that the coating compositions of the present invention may be applied to substrates other than those specifically described herein and may be applied through various known techniques such as spraying, painting, dipping, rolling, printing, etc.

It will further be appreciated that catalysts other than onium salts could be used in accordance with the invention to promote the polymerization (curing) of the composition to form a coating, for example, Lewis Acid catalysts, such as boron trifluoride. Such Lewis Acid catalysts could be used with or without radiation.

Whereas particular embodiments of the invention have been described above for purposes of illustration, it will be appreciated by those skilled in the art that numerous variations of the details may be made without departing from the invention as described in the appended claims.

## Claims

1. A composition for preparing a water-resistant coating comprising one or more reactants, at least approximately 25 percent by weight of said reactants comprising a triglycidyl ether of trimethylol alkane, said composition further including an effective amount of an onium salt catalyst which promotes curing of the composition when said composition is exposed to radiation.

2. A coating composition according to claim 1, wherein said triglycidyl ether of trimethylol alkane is represented by the formula

$$R\text{-}C\text{-}(R')_3$$

where R is an alkane group of 1 to 4 carbons and $R^1$ is represented by the formula

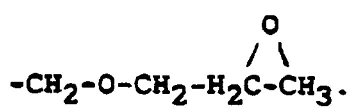

3. A composition according to claim 1 or 2, wherein said triglycidyl ether of trimethylol alkane comprises at least about 50% by weight of said reactants.

4. A composition according to claim 1, 2 or 3, wherein said triglycidyl ether of trimethylol alkane comprises substantially 100% by weight of said reactants.

5. A composition according to claim 5, wherein said epoxy-reactants further include one or more compounds selected from the group of urethane-acrylates, pentaerythritol polyacrylates and epoxy-containing materials.

6. A composition according to claim 5, wherein said epoxy-containing materials include one or more compounds selected from the group cycloaliphatic epoxides, aromatic epoxides, aliphatic epoxides, epoxy-silanes, epoxy-acrylates, epoxy-urethanes and epoxy-sulfonates.

7. A composition according to claim 6, wherein said epoxy-containing materials include one or more compounds selected from the group diclycidyl ether of neopentyl glycol, gamma-glycidoxypropyl trimethoxysilane; 2-ethylhexyl glycidyl ether; vinylcyclohexene dioxide; vinylcyclohexene monoxide; 3,4-epoxycyclohexylmethyl-3,4-epoxy-cyclohexane-carboxylate; and 3,4-epoxycyclohexylmethyl-3,4-epoxy-cyclohexane-carboxylate vinylcyclohexene monoxide.

8. A composition accordng to any preceding claim, wherein said onium salt is represented by the formula

$$(R^1)(R^2)(R^3)\text{-}A\text{-}X$$

where $R^1$, $R^2$ and $R^3$ are the same or different and each is an aromatic group, which group is at least as electron-withdrawing as benzene, A is a Group Va, VIa or VIIa atom and X is an anion which when combined with a hydrogen atom would form an acid capable of curing an epoxide.

9. A composition according to claim 8, wherein said onium salt is selected from the group of triarylsulfonium hexafluoroantimonate, triarylsulfonium hexafluorophosphate, diaryliodium hexafluoroantimonate,

diaryliodium hexafluorophosphate, triarylselenium hexafluoroantimonate and triarylselenium hexafluorophosphate.

**10.** A composition according to any preceding claim, wherein said triglycidyl ether of trimethylol alkane is either triglycidyl ether of trimethylol propane or triglycidyl ether of trimethylol ethane or a mixture thereof.

**11.** A composition for coating a substrate comprising a tryglycidyl ether of trimethylol alkane and an onium salt catalyst.

**12.** A composition according to any preceding claim, further including at least one additive selected from the group of surfactants, slip aids, levelling aids, flow-out aids and light-absorbing aids.

**13.** A composition according to any preceding claim, said composition having a viscosity of less than 200 cps at 25°C.

**14.** A composition according to any preceding claim, said composition having a viscosity of less than 100 cps at 25°C.

**15.** A composition according to any preceding claim, said composition having greater than about 40% solids.

**16.** A composition according to any preceding claim, said composition having greater than about 50% solids.

**17.** A composition according to any preceding claim, said composition being substantially free of organic solvents.

**18.** A cured coating on a substrate, wherein said cured coating comprises the reaction product formed when a composition according to any one of claims 1 to 17 is coated onto a substrate and cured by exposure to radiation to cure said coating.

**19.** A cured coating according to claim 18, wherein said substrate is chosen from the group including developed photographic paper, a developed photographic negative or positive, a plastic surface, a wood surface, a painted metal surface, a bare metal surface or a glass surface.

**20.** A process for applying a waterproof coating to a substrate, comprising:
a. applying a layer of a coating composition to said substrate, said coating composition comprising a triglycidyl ether of trimethylol alkane and an onium salt catalyst; and
b. exposing said layer to radiation for a period of time sufficient to cure said coating composition.

**21.** A process according to claim 20, wherein said radiation is selected from the group ultraviolet, natural sunlight, blue light and electron beam radiation.

**22.** A process according to claim 20 or 21, wherein said period of time is at least about 15 seconds.

**23.** A process according to claim 20, 21 or 22, wherein said triglycidyl ether of trimethylol alkane is represented by the formula

$$R\text{-}C\text{-}(R')_3$$

where R is an alkane group of 1 to 4 carbons and R′ is represented by the formula

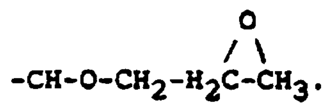

**24.** A process according to claim 23, wherein R is a propane or ethane group.

European Patent Office

# EUROPEAN SEARCH REPORT

Application Number
EP 91309944.6

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl.5) |
| A | DATABASE WPIL, no. 85-168 307, DERWENT PUBLICATIONS LTD., London, GB & JP-A-60-097 649 (HITA) 85-05-31 -- | 1 | C 09 D 163/00<br>C 09 D 7/12<br>C 09 D 5/00<br>C 08 F 2/50 |
| A | DATABASE WPIL, no. 85-143 187, DERWENT PUBLICATIONS LTD., London, GB & JP-A-60-076 738 (HITB) 85-05-01 -- | 1 | |
| A | DATABASE WPIL, no. 89-082 544, DERWENT PUBLICATIONS LTD., London, GB & JP-A-01-036 622 (ELED) 89-02-07 -- | 1 | TECHNICAL FIELDS SEARCHED (Int. Cl.5) |
| A | DATABASE WPIL, no. 89-160 086, DERWENT PUBLICATIONS LTD., London, GB & JP-A-01-100 802 (MITQ) 89-04-19 ---- | 1 | C 09 D 163/00<br>C 09 D 7/00<br>C 08 F 2/00<br>C 08 G 59/00<br>C 09 D 5/00 |

The present search report has been drawn up for all claims

| Place of search | Date of completion of the search | Examiner |
|---|---|---|
| VIENNA | 10-02-1992 | PAMMINGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)